# EUROPEAN PATENT SPECIFICATION

(11) **EP 1 524 040 B1**
(45) Date of publication and mention of the grant of the patent: **28.03.2012**
(21) Application number: 04077838.3
(22) Date of filing: 14.10.2004
(51) Int. Cl.: B08B 3/00, B60S 3/04

(54) **Washing tank for the brakes of industrial and similar vehicles**
Waschbehälter für die Bremsen von industriellen Fahrzeugen und dergleichen
Cuve de lavage pour les freins de véhicules industriels et similaires

(30) Priority: 16.10.2003 IT MI20031998
(43) Date of publication of application: 20.04.2005
(73) Proprietor: Rosauto S.r.l., 36054 Montebello Vicentino, (Vicenza) (IT)
(72) Inventor: Rosa, Giuseppe, 36050 Montorso (Vicenza) (IT)
(74) Representative: Martegani, Franco

(56) References cited:
- EP-A- 1 201 323
- US-A- 4 826 539
- US-A- 5 206 970

## Description

The present invention relates to a tank for washing the brakes of industrial and similar vehicles.

More in particular, the washing tank of this finding has been designed mainly, but not exclusively, for washing the brake blocks of industrial vehicles.

In known technical state of the art, brake washing systems for trucks already exist, but these tanks are difficult to use and cumbersome.

In fact, current tanks are composed of very low receptacles containing a certain quantity of washing water, are wheel-mounted and equipped with a small pump that supplies the liquid to a brush.

When the operator needs to change or repair truck brakes, he must first raise the truck slightly from the ground using a jack, remove the wheel, and remove the hub for access to the brakes.

Then the operator places the tank full of liquid under the truck and washes the brakes with the pump and brush, before replacing them.

After washing operations, the tank containing the liquid is moved away, still containing the used liquid.

However, this system results as cumbersome and moreover, since the tank is open, vapours from said liquid could be potentially dangerous.

Moreover, since said known tanks are very low, replacement of the washing liquid presents a problem because it cannot be poured away, and the whole container must be raised with the help of two people in order to empty the contents into another container.

The European patent application publication No. EP-A-1201323 submitted by the same applicant describes a washing tank for industrial vehicle brakes in accordance with the preamble of claim 1, comprising a trolley, adapted with a vessel containing washing liquid, and a collector tank. A first pump takes in the washing liquid from the aforesaid vessel and transfers it to the collector tank through a first pipe, and a second pump sucks in the liquid from the tank and transfers it to said vessel through a second pipe.

The collector tank empty of any liquid is placed under the truck, and the brakes are washed before replacement using a brush that expels the liquid sucked in from the first pump.

The liquid contained in the collector tank and poured in from the brush is then transferred to the container through the action of the said second pump.

The Applicant noted that with time, the pump that returns the liquid from the collector tank to the container could present problems, because of the fact that grains of sand and other similar impurities are often contained in the liquid.

The aim of the present finding is to create a washing tank for brakes on industrial and similar vehicles that can be used in a safe and rational manner.

Another aim of the present finding is to create a washing tank for brakes on industrial and similar vehicles that is simple and easy to use.

These aims according to the present invention are achieved with the construction of a washing tank for brakes on industrial and similar vehicles, as described in claim 1, to be referred to as the definition for the sake of brevity.

Further characteristics of the finding are defined in other claims included in the present application.

Further aims and advantages of the present finding will be made more clear from the following description and the appended drawings, provided purely as an explanatory example and by no means limitative: In fact the finding can be applied for washing other elements different from vehicle brakes.

In the drawings:
- Figure 1 shows a schematic cross section view of a washing tank for the brakes of industrial and similar vehicles according to the present finding, in a first configuration; and

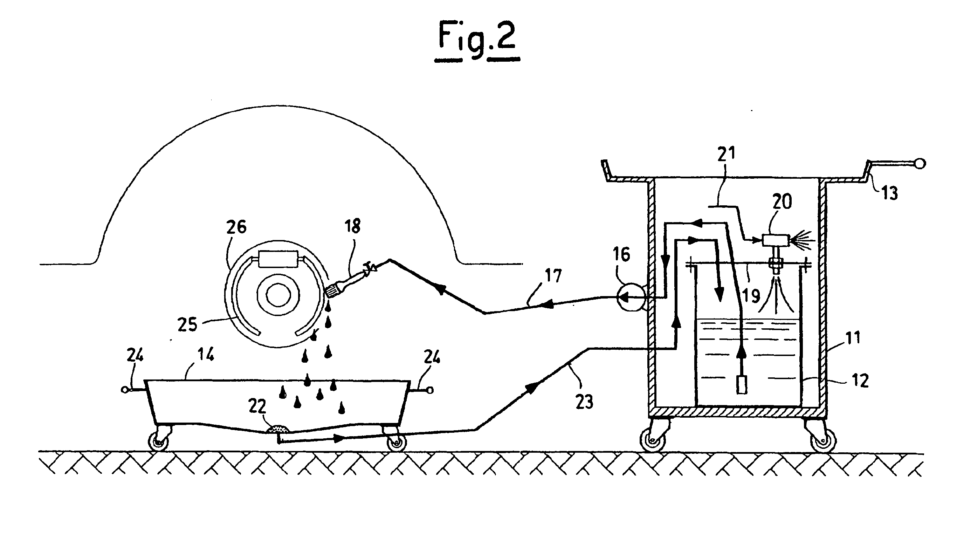

- Figure 2 shows a schematic cross section view of the washing tank shown in figure 1, in a second configuration.

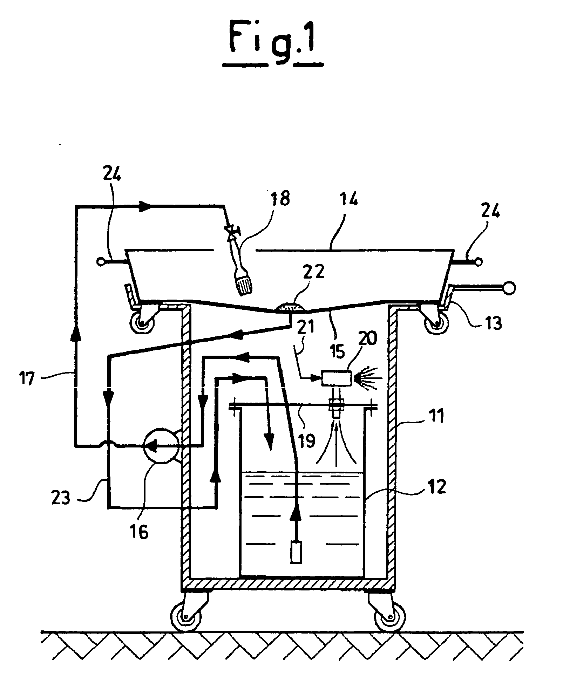

In particular reference to the aforesaid figures, the washing tank for the brakes of industrial and similar vehicles, according to the present finding, comprises a trolley 11, adapted with a vessel 12 containing the washing liquid. Above said vessel 12 is a support 13, on which is seated a collector tank 14, as shown in the configuration in figure 1.

The bottom of said collector tank 14 slopes down to a point or zone 15 where all the liquid converges.

A pump 16 takes in the liquid from vessel 12 and transfers it to the collector tank 14 through a flexible hose 17 and brush 18.

The vessel 12 is hermetically closed by a cover 19, and an air driven venturi pump 20 is mounted on the cover of said vessel and supplied with compressed air 21 to create a vacuum inside vessel 12.

In the lower part of the collector tank is a filter 22 adapted to prevent the passage of any impurities contained in the collector tank into the pipe 23 that connects said tank to vessel 12.

Said vacuum permits the liquid contained in the collector tank 14 to be sucked into vessel 12 through pipe 23.

In this manner, any impurities that may possibly manage to pass through filter 22, are simply sucked in and do not enter any pumps in any manner.

When using the tank of the present finding, after the truck wheel has been removed, the complete trolley 11 is moved close to the truck, the collector tank 14 is lifted by the handles 24 for this purpose, and is placed on the ground under the brakes 25, 26.

At this point the pump 16 is activated to take in the liquid from vessel 12, passing through the flexible supply hose 17 and the brush 18 to permit the washing of the brakes 25, 26.

The dirty washing liquid is collected by the collector tank 14, and because of the vacuum created in vessel 12 by the air driven venturi pump 20, supplied by compressed air 21, it is sucked in and transferred to vessel 12 through pipe 23.

In this manner, the collector tank 14 remains empty all the time, making it easy to clean and handle.

When the collector tank 14 is positioned in its support seat 13 above the vessel 12 containing the liquid, this can be used as a standard washing vessel for mechanical parts or similar elements.

When the washing operation is completed, it is easy to replace the dirty washing water because it has already been transferred to vessel 12.

From the aforesaid description, the characteristics and the advantages of the washing tank for brakes on industrial or similar vehicles, object of the present finding become perfectly clear.

## Claims

1. Washing tank for brakes on industrial vehicles comprising a trolley (11) adapted with a vessel (12) for containing a washing liquid, and a collector tank (14), on which a pump (16) is positioned between said vessel (12) and said collector tank (14) to take in the washing liquid from said vessel (12), and to transfer it to the collector tank (14) through a first pipe (17), wherein said collector tank (14) is movable with respect to said vessel (12) said collector tank (14) being connected to said vessel (12) through a second pipe (23), **characterised by** the fact that said vessel (12) is hermetically closed by a cover (19), said washing tank further comprising an air driven venturi pump (20) supplied by compressed air (21) and mounted on the cover of said vessel (12), so that said air driven venturi pump (20) creates a vacuum inside said vessel (12) for sucking into said vessel (12) said liquid in said collector tank (14).

2. Washing tank according to claim 1, wherein said first pipe (17) is provided with a brush (18) to wash brakes (25, 26).

3. Washing tank according to claim 1, wherein the bottom of said collector tank (14) slopes towards a zone (15) where all washing liquid converges.

4. Washing tank according to claim 3, wherein the said convergence zone (15) of the washing liquid is adapted with a filter (22) and connected with said second pipe (23).

5. Washing tank according to claim 1, wherein it also comprises a support (13) to seat the said collector tank (14) above the liquid vessel (12).

## Patentansprüche

1. Waschgefäß für Bremsen an industriellen Fahrzeugen, welches einen Transportwagen (11), der mit einem Behälter (12) zum Aufnehmen einer Waschflüssigkeit ausgebildet ist, und ein Sammelgefäß (14) umfasst und an welchem eine Pumpe (16) zwischen dem Behälter (12) und dem Sammelgefäß (14) angeordnet ist, um die Waschflüssigkeit von dem Behälter (12) aufzunehmen und diese durch ein erstes Rohr (17) zu dem Sammelgefäß (14) zu übertragen, wobei das Sammelgefäß (14) bezüglich des Behälters (12) bewegbar ist und wobei das Sammelgefäß (14) durch ein zweites Rohr (23) mit dem Behälter (12) verbunden ist,
**dadurch gekennzeichnet, dass**
der Behälter (12) durch eine Abdeckung (19) luftdicht verschlossen ist, wobei das Waschgefäß ferner eine mit Luft betriebene Venturipumpe (20) umfasst, die mit komprimierter Luft (21) versorgt wird und an der Abdeckung des Behälters (12) befestigt ist, sodass die mit Luft betriebene Venturipumpe (20) ein Vakuum im Innern des Behälters (12) erzeugt, um die Flüssigkeit aus den Sammelgefäß (14) in den Behälter (12) zu saugen.

2. Waschgefäß nach Anspruch 1,
wobei das erste Rohr (17) mit einer Bürste (18) versehen ist, um Bremsen (25, 26) zu waschen.

3. Waschgefäß nach Anspruch 1,
wobei der Boden des Sammelgefäßes (14) in Richtung einer Zone (15) geneigt ist, in der die gesamte Waschflüssigkeit zusammenläuft.

4. Waschgefäß nach Anspruch 3,
wobei die Zone (15) des Zusammenlaufens der Waschflüssigkeit mit einem Filter (22) ausgestattet und mit dem zweiten Rohr (23) verbunden ist.

5. Waschgefäß nach Anspruch 1,
wobei dieses auch eine Halterung (13) umfasst, um das Sammelgefäß (14) oberhalb des Flüssigkeitsbehälters (12) zu lagern.

## Revendications

1. Cuve de lavage pour les freins de véhicules industriels comprenant un chariot (11) équipé d'un récipient (12) destiné à contenir un liquide de lavage, et une cuve réceptrice (14), sur laquelle une pompe (16) est positionnée entre ledit récipient (12) et ladite cuve réceptrice (14) pour prendre le liquide de lavage dans ledit récipient (12) et le transférer vers la cuve réceptrice (14) par l'intermédiaire d'un premier tuyau (17), dans laquelle ladite cuve réceptrice (14) est mobile par rapport audit récipient (12), ladite cuve réceptrice (14) étant connectée audit récipient (12) par un deuxième tuyau (23), **caractérisé en ce que** ledit récipient (12) est fermé hermétiquement par un couvercle (19), ladite cuve de lavage comprenant en outre une pompe à venturi entraînée par air (20) alimentée par de l'air comprimé (21) et montée sur le couvercle dudit récipient (12), de sorte que ladite pompe à venturi entraînée par air (20) crée un vide à l'intérieur dudit récipient (12) pour aspirer dans ledit récipient (12) ledit liquide présent dans ladite cuve réceptrice (14).

2. Cuve de lavage selon la revendication 1, dans laquelle ledit premier tuyau (17) est muni d'une brosse (18) pour laver les freins (25, 26).

3. Cuve de lavage selon la revendication 1, dans laquelle le fond de ladite cuve réceptrice (14) est incliné vers une zone (15) où converge tout le liquide de lavage.

4. Cuve de lavage selon la revendication 3, dans laquelle ladite zone de convergence (15} du liquide de lavage est pourvue d'un filtre (22) et est connectée audit deuxième tuyau (23).

5. Cuve de lavage selon la revendication 1, comprenant en outre un support (13) permettant de faire reposer ladite cuve réceptrice (14) au-dessus du récipient à liquide (12).
